**Europäisches Patentamt**

**European Patent Office**

**Office européen des brevets**

(11) Numéro de publication: **0 133 104**
**B1**

(12) **FASCICULE DE BREVET EUROPEEN**

(45) Date de publication du fascicule du brevet:
**28.10.87**

(21) Numéro de dépôt: **84401497.7**

(22) Date de dépôt: **17.07.84**

(51) Int. Cl.⁴: **B 01 J 45/00, C 22 B 3/00**

(54) Procédé de rétention d'un corps dissous dans une solution.

(30) Priorité: **22.07.83 FR 8312187**

(43) Date de publication de la demande:
**13.02.85 Bulletin 85/7**

(45) Mention de la délivrance du brevet:
**28.10.87 Bulletin 87/44**

(84) Etats contractants désignés:
**AT BE CH DE FR GB IT LI LU NL SE**

(56) Documents cités:
**DE - A - 1 517 436**
**DE - A - 2 303 081**
**FR - A - 2 187 804**
**FR - A - 2 192 115**
**FR - A - 2 304 578**
**FR - A - 2 304 578**
**FR - A - 2 357 287**

(73) Titulaire: **Centre Technique Industriel dit: INSTITUT TEXTILE DE FRANCE, 35, rue des Abondances B.P. 79, F-92105 Boulogne Billancourt Cedex (FR)**

(72) Inventeur: **Chatelin, Roger Jean, 36 Allée des Monts d'Or Dom. de Bois Dieu Lissieu, F-69380 Lozanne (FR)**
Inventeur: **Combes, Jean-François Guy, Lieuran les Beziers, D-34290 Servian (FR)**
Inventeur: **Wattiez, Daniel, Léon, 4 Allée du Bois D'Ars Dom. de Bois Dieu Lissieu, F-69380 Lozanne (FR)**

(74) Mandataire: **Richebourg, Michel François et al, Cabinet Beau de Loménie 55, rue d'Amsterdam, F-75008 Paris (FR)**

## Description

L'invention concerne un procédé pour retenir au moins un corps dissous dans une solution; il peut s'agir en particulier d'épurer des effluents industriels en retenant des corps solubles toxiques ou d'extraire de ces effluents des métaux précieux.

On connaît de nombreux procédés pour traiter des solutions en vue de retenir des corps qu'elles contiennent à l'état dissous. Certains sont basés sur la taille des corps en question, ce sont notamment les techniques d'ultra-filtration et d'osmose inverse, d'autres sont basés sur l'échange d'ions. Par exemple les certificats d'addition N° 72.20919 (FR-A-2 187 804) et 72.25472 (FR-A 2 192 115) décrivent des celluloses échangeuses d'anions et de cations et leur application au traitement de certaines eaux de rejets industrielles: les corps dissous dans ces eaux de rejet, donc à l'état ionique, sont retenus sur le matériau en cellulose grâce aux fonctions échangeuses d'ions que celle-ci comporte.

L'invention se classe dans la catégorie mettant en œuvre l'échange d'ions, mais a pour objectif de pallier aux inconvénients rencontrés couramment que sont le colmatage et la limite en capacité: le colmatage car à moins de traiter des solutions exemptes de matières insoluble les matériaux utilisés se colmatent très rapidement, et la limite en capacité qui induit une fuite ionique dès que les fonctions échangeuses d'ions sont saturées par les corps dissous dans la solution.

Selon l'invention, le procédé de rétention d'au moins un corps dissous à l'état ionique dans une solution est caractérisé en ce que dans une première étape on ajoute en excès dans la solution un polyélectrolyte capable de former une association ionique avec ledit corps et en ce que dans une seconde étape on met en contact la solution avec un matériau possédant des groupements ioniques, qui retiennent le polyélectrolyte contenu dans la solution grâce aux groupements ioniques non associés avec ledit corps. Ainsi le matériau à groupements ioniques mis en œuvre dans la seconde étape n'a pas pour fonction de retenir directement le corps dissous dans la solution comme c'est le cas dans les techniques traditionnelles d'échange d'ions, mais bien de retenir le polyélectrolyte associé avec le corps dissous. Lors de la mise en œuvre de la première étape, l'addition d'un excès de polyélectrolyte est indispensable pour que l'ensemble formé par l'association du polyélectrolyte et du corps à retenir conserve des groupements ioniques susceptibles d'être retenus par le matériau. Par ailleurs, le choix du polyélectrolyte est fonction du corps dissous que l'on veut retenir et de sa capacité à s'associer ioniquement avec ledit corps; il est donc possible, grâce à un choix judicieux du polyélectrolyte, de retenir spécifiquement par le procédé selon l'invention des corps déterminés, même s'ils ont dans la solution une concentration très faible par rapport à d'autres corps dissous que l'on ne souhaite pas retenir, ou encore même s'ils ont une affinité moindre vis-à-vis du matériau employé seul. Pour la rétention du polyélectrolyte dans la seconde étape deux voies sont possibles. Soit les groupements ioniques du matériau qui assure la rétention sont de signe opposé à celui des groupements ioniques du polyélectrolyte, moyennant quoi les ensembles formés par l'association du polyélectrolyte et du corps dissous sont retenus par le matériau par échanges d'ions au niveau des groupements ioniques du polyélectrolyte non associés au corps dissous. Soit les groupements ioniques du matériau qui assure la rétention sont du même signe que celui des groupements ioniques du polyélectrolyte, moyennant quoi les ensembles formés par l'association du polyélectrolyte et du corps dissous sont arrêtés par le matériau par effet de répulsion de charge.

Dans la seconde étape du procédé selon l'invention, la mise en contact de la solution avec le matériau peut être faite sous deux formes. Soit on fait passer la solution à travers le matériau à la manière d'un filtre, soit on fait passer la solution sur le matériau, par léchage. Dans le premier cas l'efficacité de la rétention du corps dissous sera fonction également du seuil de coupure du matériau, c'est-à-dire de sa porosité par rapport à la taille de l'ensemble formé par le polyélectrolyte associé au corps dissous. Par contre dans le second cas l'efficacité de la rétention est beaucoup moins dépendante de ce seuil de coupure, puisque le contact entre le polyélectrolyte associé au corps dissous et le matériau est beaucoup plus étroit.

Dans les techniques, type ultra-filtration, la rétention d'un corps dissous est due à l'arrêt purement mécanique de ce corps qui, de par sa taille, ne peut pas traverser la membrane d'ultra-filtration. La rétention d'un corps ne sera alors possible que dans la mesure où d'une part ledit corps a une taille relativement constante et où d'autre part la membrane a un seuil de coupure suffisant pour arrêter les corps de cette taille. L'avantage de l'invention par rapport à une telle technique réside dans le fait que l'arrêt du corps est de nature à la fois mécanique – en fonction de la taille de l'ensemble polyélectrolyte associé au corps dissous – et ionique. Ainsi même si le seuil de coupure du matériau est tel que l'effet de barrière mécanique laisserait passer les polyélectrolytes associés au corps dissous, grâce à l'effet de barrière ionique, lesdits polyélectrolytes associés sont retenus en tout ou partie. Bien sûr l'efficacité de cet effet de barrière ionique est fonction du débit de la solution à traiter et du temps de contact entre la solution et le matériau; c'est ce qui explique que la mise en œuvre du matériau par léchage est généralement préférable quand le seuil de coupure est nettement supérieur à la taille des polyélectrolytes associés que l'on veut retenir.

Dans la première phase du procédé selon l'invention, on ajoute le polyélectrolyte en excès, de manière d'une part à former des associations entre le polyélectrolyte et le corps dissous, et d'autre part à conserver sur les polyélectrolytes ainsi associés des groupements ioniques susceptibles d'être retenus par le matériau mis en œuvre dans la seconde phase. Néanmoins même avec un excès de polyélectrolyte par rapport à la quantité de corps dissous, il peut se faire qu'une partie du corps dissous ne soit pas associée au polyélectrolyte et reste dans la solution sous sa forme initiale. Dans ce cas, il est avantageux de mettre en œuvre dans la seconde phase non pas un mais deux matériaux comportant des groupements ioniques: le premier matériau ayant des groupements ioniques de signe opposé aux groupements ioniques du polyélectrolyte, retient ces polyélectrolytes par échange d'ions, le second matériau ayant des groupements ioniques de même signe que les groupements ioniques du polyélectrolyte retient le corps dissous resté dans la solution sous forme ionique, non associé, également par échange d'ions. Ainsi, le premier matériau retient la plus grande partie du corps dissous qui est associée au polyélectrolyte et le second retient le reliquat du corps dissous resté à l'état ionique dans la solution. Par rapport à l'utilisation d'un matériau unique, du type du second matériau décrit ci-dessus, pour retenir tout le corps dissous à l'état ionique dans la solution, la combinaison selon l'invention présente l'avantage de ne pas être limitée au point de vue de la capacité de l'échange d'ions. En effet dans le cas d'un matériau échangeur d'ions classique, les groupements ioniques dudit matériau retiennent directement le corps dissous à l'état ionique, et l'efficacité de cette rétention est fonction du nombre de groupements ioniques accessibles disponibles sur le matériau, c'est-à-dire de sa capacité. Dans la mise en œuvre selon le procédé de l'invention, étant donné que dans la première phase on associe le corps dissous à un polyélectrolyte, qui est en fait un échangeur d'ion soluble, et qu'on ne laisse sur ce polyélectrolyte qu'une quantité réduite de groupements ioniques, la quantité de groupements ioniques du matériau échangeur, nécessaire pour retenir ledit polyélectrolyte associé sera beaucoup moins importante que dans le cas précédent.

Une fois retenu par le matériau échangeur d'ions, le corps associé au polyélectrolyte peut être éliminé ou récupéré par différents procédés. On peut incinérer le matériau, notamment lorsqu'il s'agit d'un corps toxique. On peut le régénérer de façon classique en échange d'ions, par passage d'une solution acide ou basique selon le signe de l'échangeur d'ions. Dans ce cas, étant donné que les liaisons entre le polyélectrolyte et le matériau sont relativement faibles, la quantité de réactifs de régénération sera également plus faible. Lorsque les groupements ioniques du matériau mis en œuvre dans la seconde phase sont de même signe que celui du polyélectrolyte et que donc la rétention se fait par répulsion de charge, en plus de l'effet de barrière mécanique, la séparation du polyélectrolyte associé au corps dissous et du matériau peut s'effectuer par une simple opération mécanique, du type rinçage décolmatant, puisqu'il n'y a aucune liaison effective entre le polyélectrolyte et le matériau. On peut également pratiquer l'échange du corps associé au polyélectrolyte en laissant tout ou partie dudit polyélectrolyte sur le matériau.

L'invention sera mieux comprise grâce aux exemples de réalisation, décrits ci-après à titre d'illustration du procédé selon l'invention.

Exemple 1

Un litre d'une solution aqueuse contient 160 mg de cuivre sous forme de sulfate. On lui ajoute 150 mg de polyacide acrylique de masse molaire moyenne comprise entre 2000 et 10 000 qui est un polyélectrolyte possédant comme groupements ioniques des groupements carboxyliques de signe négatif. Après agitation lente, pendant une minute, on note une accentuation de la teinte bleutée de la solution qui reste néanmoins limpide: cette teinte bleutée est significative de la fixation des ions cuivriques sur le polyacide acrylique.

1.a. On filtre cette solution sur une disque de papier filtre classique, non échangeur d'ions, de porosité moyenne 5 microns, de diamètre utile 50 mm et dont le grammage est de 170 g/m². Le filtrat recueilli contient 130 mg/l de polyacide acrylique, ce qui illustre le faible effet de barrière mécanique compte-tenu de la taille du polyélectrolyte.

1.b. Partant de la même solution, on la filtre sur un disque de papier greffé échangeur d'anion réalisé selon l'enseignement du certificat d'addition français N° 72.20919, ayant les mêmes caractéristiques physiques que le papier filtre utilisé en 1.a. Le filtrat recueilli contient 45 mg de polyacide acrylique et 55 mg de cuivre: une faible partie du cuivre n'est pas associée au polyélectrolyte.

1.c. On effectue la même opération qu'en 1.b. mais avec une superposition de 5 disques de papier greffé échangeur d'anion. Le filtrat recueilli contient 3 mg de polyélectrolyte et 12 mg de cuivre: le cuivre à l'état ionique, non associé au polyélectrolyte n'a pas été retenu, par contre le cuivre associé à été presque totalement retenu.

1.d. On effectue la même opération qu'en 1.c. mais avec une superposition de 3 disques de papier greffé échangeur d'anion et de 2 disques de papier greffé échangeur de cation, réalisé selon l'enseignement du certificat d'addition français N° 72.25472. Le filtrat recueilli contient 5 mg de polyélectrolyte et moins de 1 mg de cuivre, les disques de papier greffé échangeur de cation ont une teinte légèrement bleutée caractéristique de la présence des ions cuivriques.

Exemple 2

On effectue une opération similaire à celle décrite dans l'exemple 1.d. mais en partant d'une solution contenant un polyacide acrylique dont la masse molaire moyenne est comprise entre 30 000 et 50 000. Le filtrat recueilli contient moins de 1 mg de cuivre, mais le polyélectrolyte n'est plus décelable dans le filtrat, il a été totalement retenu par les deux effets conjugués de barrière mécanique et ionique.

Exemple 3

On effectue une opération similaire à celle décrite dans l'exemple 1.d. mais en partant d'une solution contenant 100 mg de sulfate de cuivre et 100 mg de sulfate de nickel. Le filtrat recueilli contient 10 mg/l de polyacide acrylique, 2 mg/l de cuivre et 2 mg/l de nickel.

Les ions cuivriques et nickel sont capables de s'associer dans les mêmes conditions au polyacide acrylique.

Exemple 4

On part de 10 litres d'une solution de bichromate de potassium à 50 mg/l, additionnée d'un polyélectrolyte soluble du type polyalcool vinylique à fonctions ammonium quaternaire à la con-centration de 1 g/l. Après agitation lente pendant une minute, on filtre:

4.a. Sur quatre disques de papier greffé échangeur de cations de 20 cm de diamètre et pesant au total 33 g. Le filtrat recueilli contient 8 mg/l de bi-chromate.

4.b. Sur trois disques de papier greffé échangeur de cations et un disque de papier greffé échangeur d'anions. Le filtrat recueilli contient moins de 1 mg/l de bichromate.

Exemple 5

A une solution contenant un émulsionnant sul-fonique en C 16, de masse molaire 342, à la concentration de 1,1 g/l, on ajoute un polyméthacry-late de diéthylaminoéthyl quaternisé qui est un polyélectrolyte possédant des fonctions échangeurs d'anion fortes, à raison de 1g/l. On traite 10 litres de cette solution tangentiellement, sous faible pression, sur un disque de papier greffé échangeur de cation et un disque de papier greffé échangeur d'anion. La solution résiduelle contient moins de 10 mg/l d'émulsionnant.

Les exemples ci-dessus ne sont pas limitatifs de l'invention. En particulier, la forme du matériau possédant des groupements ioniques n'est pas exclusivement un papier, mais toute forme adéquate en fonction du problème à résoudre: résine, tissu, fibres, fils, bourre, poudre ... La forme papetière a l'avantage de présenter une grande surface de contact, qui s'ajoute à la grande hydrophobie de la cellulose. Le matériau dispersé dans la solution sous forme de poudre, fibres, fils, bourre est susceptible d'être isolé facilement par les opérations conventionnelles telles que filtration mécanique, décantation, centrifugation ... Par ailleurs, on l'a vu précédemment, on peut utiliser différents polyélectrolytes, de diverse masse molaire, dont les groupements sont anioniques ou cationiques; il revient à l'homme du métier de choisir et le polyélectrolyte et le matériau en fonction des conditions opératoires et du ou des corps qu'il a à retenir.

Revendications

1. Procédé de rétention d'au moins un corps dissous à l'état ionique dans une solution, caractérisé en ce que dans une première étape on ajoute en excès dans la solution un polyélectrolyte capable de former une association ionique avec ledit corps, et en ce que dans une seconde étape on met en contact la solution ainsi obtenue avec un matériau possédant des groupements ioniques qui retiennent le polyélectrolyte grâce aux groupements ioniques non associés avec ledit corps.

2. Procédé selon la revendication 1, caractérisé en ce que la seconde étape consiste à faire passer la solution à travers le matériau possédant des groupements ioniques et à récupérer la solution traitée par filtration.

3. Procédé selon la revendication 1 caractérisé en ce que la seconde étape consiste à faire passer la solution sur le matériau possédant des groupements ioniques et à récupérer la solution traitée par léchage tangentiel.

4. Procédé selon la revendication 1 caractérisé en ce que la seconde étape consiste à disperser dans la solution le matériau possédant des groupements ioniques notamment sous forme de poudre, fibres, fils, bourre, et à récupérer la solution traitée en isolant le matériau dispersé.

5. Procédé selon l'une des revendications 1 à 4 caractérisé en ce que le matériau comporte des groupements ioniques de signe opposé à celui des groupements ioniques du polyélectrolyte, moyennant quoi le polyélectrolyte associé au corps dissous est retenu par le matériau par échange d'ions au niveau de ses groupements ioniques non associés.

6. Procédé selon l'une des revendications 1 à 4 caractérisé en ce que le matériau comporte des groupements ioniques de même signe que celui des groupements ioniques du polyélectrolyte, moyennant quoi le polyélectrolyte associé au corps dissous est arrêté par le matériau par effet de répulsion de charge au niveau de ses groupements ioniques non associés.

7. Procédé selon l'une des revendications 1 à 4 caractérisé en ce que dans la seconde étape, deux matériaux interviennent, l'un comportant des groupements ioniques de signe opposé à celui des groupements ioniques du polyélectrolyte, l'autre des groupements ioniques de même signe que celui des groupements ioniques dudit polyélectrolyte, moyennant quoi le polyélectrolyte associé au corps dissous est retenu, par échange d'ions, au niveau de ses groupements ioniques non associés par le premier desdits matériaux et le corps dissous non associé est retenu, par échange d'ions, par le second desdits matériaux.

8. Procédé selon l'une des revendications 1 à 7, caractérisé en ce que le matériau est un matériau fibreux.

9. Procédé selon la revendication 8, caractérisé en ce que les groupements ioniques du matériau fibreux ont été obtenus par greffage.

Patentansprüche

1. Verfahren zum Halten mindestens eines gelösten Körpers in ionischem Zustand in einer Lösung, dadurch gekennzeichnet, dass man in einer ersten Stufe in die Lösung im Überschuss einen Polyelektrolyten zugibt, der mit dem Körper eine Ionenassoziation bilden kann, und dass man in einer zweiten Stufe die so erhaltene Lösung mit einem Material in Kontakt bringt, das ionische Gruppen aufweist, die den Polyelektrolyten dank der mit dem Körper nicht assoziierten ionischen Gruppen zurückhalten.

2. Verfahren nach Anspruch 1, dadurch gekennzeichnet, dass die zweite Stufe darin besteht, dass die Lösung durch das ionische Gruppen aufweisende Material geleitet wird und die behandelte Lösung durch Filtration rückgewonnen wird.

3. Verfahren nach Anspruch 1, dadurch gekennzeichnet, dass die zweite Stufe darin besteht, dass die Lösung über das ionische Gruppen aufweisende Material geleitet wird und die behandelte Lösung durch tangentiales Bestreichen rückgewonnen wird.

4. Verfahren nach Anspruch 1, dadurch gekennzeichnet, dass die zweite Stufe darin besteht, dass das ionische Gruppen aufweisende Material, insbesondere in Form von Pulver, Fasern, Fäden, Wolle, in der Lösung dispergiert wird und die behandelte Lösung durch Isolieren des dispergierten Materials rückgewonnen wird.

5. Verfahrens nach einem der Ansprüche 1 bis 4, dadurch gekennzeichnet, dass das Material ionische Gruppen mit zu den ionischen Gruppen des Polyelektrolyten entgegengesetztem Vorzeichen umfasst, mit der Massgabe, dass der mit dem gelösten Körper assoziierte Polyelektrolyt durch Ionenaustausch im Bereich seiner nichtassoziierten ionischen Gruppen vom Material zurückgehalten wird.

6. Verfahren nach einem der Ansprüche 1 bis 4, dadurch gekennzeichnet, dass das Material ionische Gruppen mit demselben Vorzeichen wie jenes der ionischen Gruppen des Polyelektrolyten umfasst, mit der Massgabe, dass der mit dem gelösten Körper assoziierte Polyelektrolyt durch die Wirkung von Ladungsabstossung im Bereich seiner nichtassoziierten ionischen Gruppen zurückgehalten wird.

7. Verfahren nach einem der Ansprüche 1 bis 4, dadurch gekennzeichnet, dass in der zweiten Stufe zwei Materialien zum Einsatz gelangen, wobei das eine ionische Gruppen mit zu jenem der ionischen Gruppen des Polyelektrolyten entgegengesetztem Vorzeichen und das andere ionische Gruppen desselben Vorzeichens wie jenes der ionischen Gruppen des Polyelektrolyten umfasst, mit der Massgabe, dass der mit dem gelösten Körper assoziierte Polyelektrolyt durch Ionenaustausch im Bereich seiner mit dem ersten dieser Materialien nichtassoziierten ionische Gruppen und der nichtassoziierte gelöste Körper durch Ionenaustausch vom zweiten dieser Materialien zurückgehalten wird.

8. Verfahren nach einem der Ansprüche 1 bis 7, dadurch gekennzeichnet, dass das Material ein Fasermaterial ist.

9. Verfahren nach Anspruch 8, dadurch gekennzeichnet, dass die ionischen Gruppen des Fasermaterials durch Pfropfen erhalten sind.

**Claims**

1. Process for the retention of at least one substance dissolved in an ionic state, in a solution, characterized in that in a first step, an excess of a polyelectrolyte capable of forming an ionic association with the said substance is added to the solution, and in that in a second step, the solution thus obtained is brought into contact with a material possessing ionic groups which retain the polyelectrolyte by virtue of the ionic groups not associated with the said substance.

2. Process according to claim 1, characterized in that the second step consists in passing the solution through the material possessing ionic groups and in recovering the solution treated by filtration.

3. Process according to claim 1, characterized in that the second step consists in passing the solution over the material possessing ionic groups and in recovering the solution treated by tangential bathing.

4. Process according to claim 1, characterized in that the second step consists in dispersing the material possessing ionic groups in the solution, in particular in the form of powder, fibers, filaments or wadding, and in recovering the solution treated by isolating the dispersed material.

5. Process according to any one of claims 1 to 4, characterized in that the material contains ionic groups having the opposite sign to that of the ionic groups of the polyelectrolyte, whereby the polyelectrolyte associated with the dissolved substance is retained by the material by means of ion exchange in respect of its ionic groups which are not associated.

6. Process according to any one of claims 1 to 4, characterized in that the material contains ionic groups having the same sign as that of the ionic groups of the polyelectrolyte, whereby the polyelectrolyte associated with the dissolved substance is stopped by the material by means of a charge repulsion effect in respect of its ionic groups which are not associated.

7. Process according to any one of claims 1 to 4, characterized in that in the second step, two materials are used, one comprising ionic groups having the opposite sign to that of the ionic groups of polyelectrolyte, and the other ionic group having the same sign as that of the ionic groups of the polyelectrolyte, whereby the polyelectrolyte associated with the dissolved substance is retained by the first material by means of ion exchange in respect of its ionic groups which are no associated by the first of these materials, and the dissolved sbustance which is not associated is retained by the second material by means of ion exchange.

8. Process according to any one of claims 1 to 7, characterized in that the material is a fibrous material.

9. Process according to claim 8, characterized in that the ionic groups of the fibrous material have been obtained by grafting.